# EUROPEAN PATENT APPLICATION

(11) **EP 3 166 054 A1**
(43) Date of publication of application: **10.05.2017**
(21) Application number: 16196978.7
(22) Date of filing: 03.11.2016
(51) Int. Cl.: G06Q 10/00, G06F 3/01

(54) **VEHICLE MAINTENANCE APPARATUS AND METHOD**

(30) Priority: 03.11.2015 US 201514930886
(71) Applicant: CNH Industrial Belgium nv, 8210 Zedelgem (BE)
(72) Inventor: Brubaker, Christopher A., Leola, Pennsylvania 17540 (US); Carpentier, Michael, 8490 Varsenare (BE)
(74) Representative: CNH Industrial IP Department

(57) **Abstract**

A vehicle maintenance system for use with an agricultural vehicle (10) including a viewing system (16) configured to process an image of at least a portion of the vehicle (10) and an augmentation system (18). The augmentation system (18) is configured to identify an element of the vehicle (10) in the image; receive information from the vehicle (10) about a maintenance action relative to the element; and place a designator (28, 30, 32) proximate to the element identified in the image, the designator (28, 30, 32) indicating the maintenance action that is to be undertaken involving the element.

## Description

### BACKGROUND OF THE INVENTION

The present invention relates to vehicles, and, more particularly, to an apparatus to direct the maintenance of an agricultural vehicle.

Vehicles in general and agricultural vehicles in particular require maintenance and/or adjustments of their subsystems. An agricultural combine, for example, is used to harvest agricultural crops such as corn, soybeans, wheat and other grain crops. As the combine is operated maintenance items arise, either as a passage of operation or as detected by sensors on the combine.

Augmented reality (AR) systems provide a live direct or indirect view of a physical, real-world environment whose elements are augmented or supplemented by way of a computer-generated sensory input such as sound, video, graphics or GPS data. AR systems are used to enhance a person's current perception of reality. The augmentation process is conventionally carried out in real-time and in context with detected or known environmental elements, such as a battlefield environment. The AR technology includes object recognition allowing the information about the viewed environment to become interactive. Information about the environment and its objects can be overlaid on the view of the real world.

What is needed in the art is a vehicular maintenance system that uses AR and allows for easy identification of the item to be maintained and with information on the way to perform the maintenance.

### SUMMARY OF THE INVENTION

The present invention provides an agricultural vehicle with an onboard maintenance record system that interacts with an AR system to assist the operator with maintenance actions.

The invention in one form is directed to an agricultural vehicle including a chassis, a controller carried by the chassis, and a vehicle maintenance system coupled to the vehicle. The vehicle maintenance system includes a viewing system configured to process an image of at least a portion of the vehicle and an augmentation system. The augmentation system is configured to identify an element of the vehicle in the image; receive information from the vehicle about a maintenance action relative to the element; and place a designator proximate to the element identified in the image, the designator indicating the maintenance action that is to be undertaken involving the element.

The invention in another form is directed to a vehicle maintenance system that includes a viewing system configured to process an image of at least a portion of the vehicle and an augmentation system. The augmentation system is configured to identify an element of the vehicle in the image; receive information from the vehicle about a maintenance action relative to the element; and place a designator proximate to the element identified in the image, the designator indicating the maintenance action that is to be undertaken involving the element.

The invention in yet another form is directed to a vehicle maintenance method including the steps of: viewing a portion of the vehicle with a viewing system, the viewing system displaying an image; identifying an element of the vehicle in the image; receiving maintenance information about the element from the vehicle; and augmenting the image by placing a designator proximate to the element identified in the image, the designator including information received in the receiving step.

An advantage of the present invention is that all of the maintenance information for the vehicle is contained in the vehicle.

Another advantage of the present invention is that the maintenance system uses interactive helps and prompting of the user by way of a device that a lot of people are already familiar with, such as a smart phone.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
Fig. 1 is a view of an embodiment of a vehicle maintenance apparatus according to the present invention;
Fig. 2 is a view of another embodiment of the vehicle maintenance apparatus according to the present invention;
Fig. 3 is a view of the invention being carried out on a smart phone; and
Fig. 4 is a block diagram illustrating an interface of a display device coupled with a control system of a vehicle.

Corresponding reference characters indicate corresponding parts throughout the several views. The exemplifications set out herein illustrate embodiments of the invention and such exemplifications are not to be construed as limiting the scope of the invention in any manner.

### DETAILED DESCRIPTION OF THE INVENTION

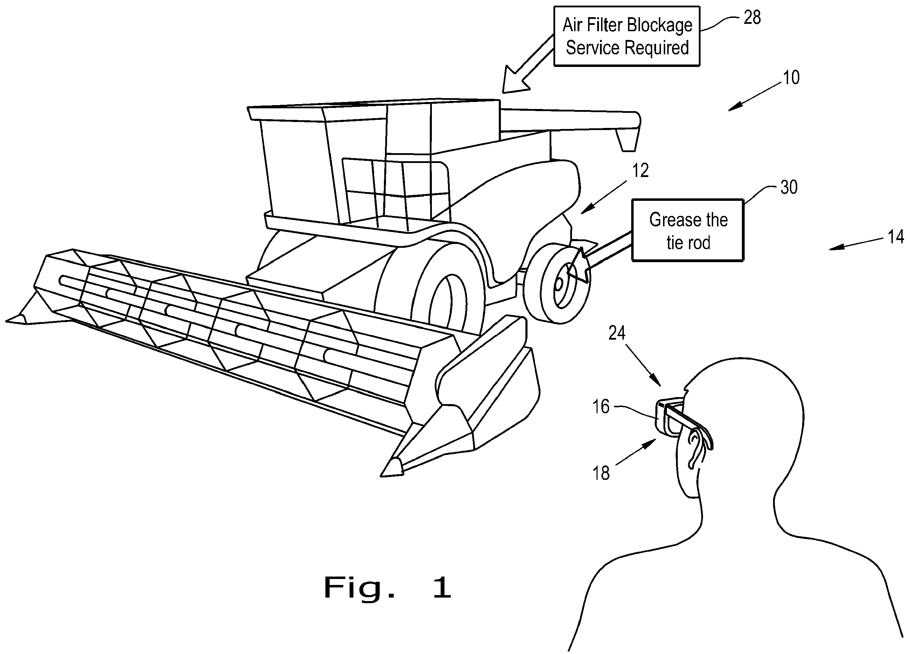

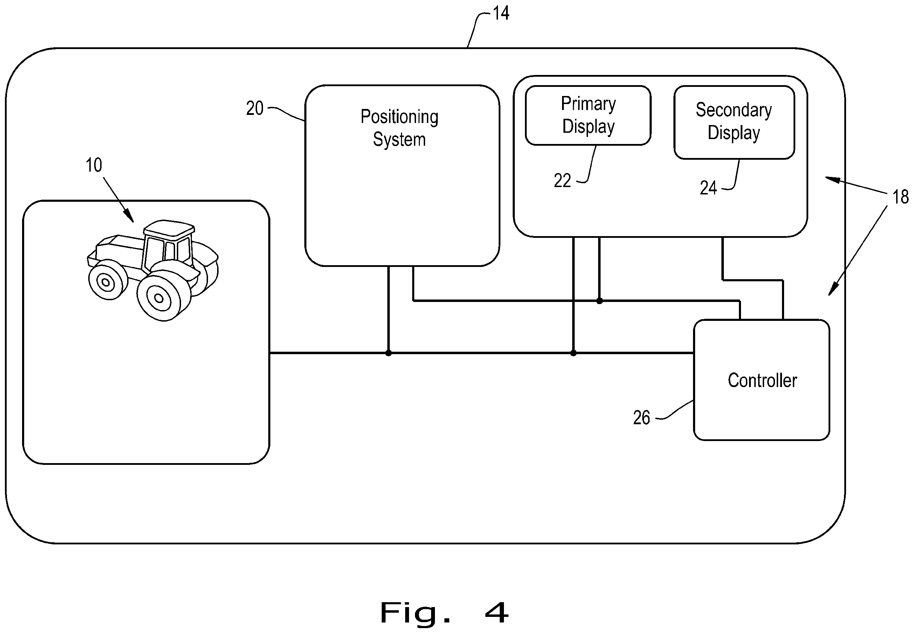

Referring now to the drawings and more specifically to Figs. 1-4 there is shown an agricultural vehicle 10 having a chassis 12. A viewing system 16 works in cooperation with an augmentation system 18 to display information regarding vehicle 10 on a display 24 thereby providing information and instructions to an operator about vehicle 10 A primary display 22 located in the cab of vehicle 10 alerts the operator that an active fault has been detected or that maintenance is needed. A positioning system 20 assists a controller 26 with determining what designators to place in the viewing area of secondary display 24.

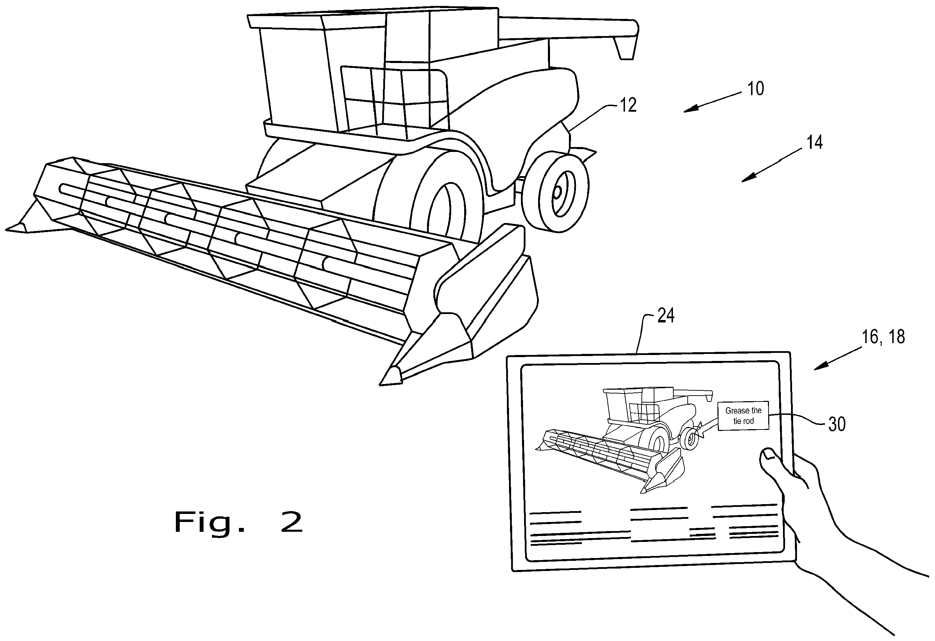

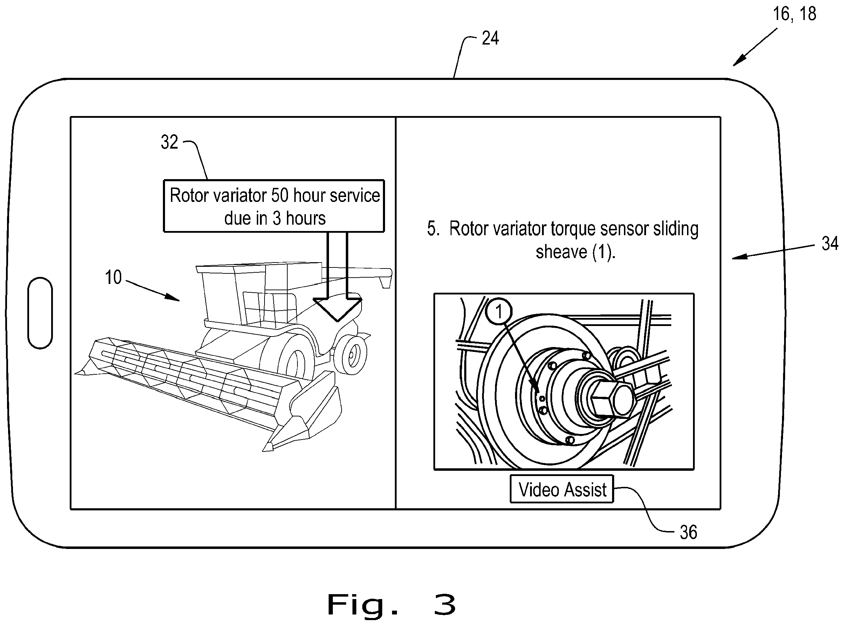

The secondary display 24 may be a set of viewing glasses, as shown in Fig. 1, a tablet as shown in Fig. 2, or a phone as shown in Fig. 3, each using a viewing system 16 and the augmentation system 18. The viewing system 16 can be optic as in the case of the viewing glasses or a produced image as in the case with the other devices. Augmentation system 18 detects the portion of the vehicle 10 being viewed so that information relevant to what is being viewed is shown.

In Fig. 1 there is shown a person wearing a display 24, which is remotely connected to controller 26. The view of vehicle 10 by the operator is augmented by augmentation system 18 placing designators 28 and 30 there so that information about issues needing attention are brought to the attention of the operator. Here designator 28, which may be at least partially color coded red to indicate that there is an active fault that needs immediate attention, in that the air filter has a blockage that needs to be cleared, by indicating that service is required. The operator can select which issue is to be currently addressed, or as the operator approaches a portion of the vehicle 10, such as the air filter, controller 26 understands that this particular issue is to be addressed.

When the focus is on one issue represented by a designator, then other designators, such as designator 30, may be temporarily removed from the display, so that a focus on, as in this case, the air filter can be undertaken. More detailed information about the air filter can be shown as the operator approaches the air filter, such as suggested courses of action, what tools are needed, what steps are needed to access the air filter, when the air filter was last serviced or replaced, and when the next regular service is scheduled.

In Fig. 2, another embodiment of the secondary display 24 is illustrated with designator 30 showing that a tie rod needs to be greased. The camera in display 24 is directed at vehicle 10 and the image is processed so that elements of vehicle 10 that appear in the image are identified so that designator 30 is directed to the right element. Controller 26, which is located in vehicle 10, although other locations are also contemplated, keeps track of the maintenance requirements and operational faults of vehicle 10 so that it can be properly maintained. Here, controller 26 has determined that the tie rod is due to be greased, hence designator 30 is positioned with an arrow generally pointing to where the tie rod is located.

In Fig. 3, another embodiment of the secondary display 24 is illustrated in the form of a phone that is wirelessly coupled to controller 26 that is illustrating a split screen, with the left side having the image of vehicle 10 with a designator 32 indicating that the rotor variator has an upcoming maintenance action that is due in 3 hours. On the right half of the screen a detailed image is sent by controller 26 to illustrate to the operator what is to be looked for as the operator approaches a part of vehicle 10. Again the messages may be changed as the position of the operator changes, as detected by positioning system 20, so that more pertinent information is conveyed to the operator. Yet further, if the operator needs to have a tutorial to illustrate what is to be done the operator can select the video assistance button 36 and controller 26 sends a video of the actions needed to address the maintenance issue. Once the operator has completed the operation controller 26 notes the completion in the record and schedules the next maintenance event. It is also contemplated that display 24 may record a portion of the maintenance or even request that the operator scan the area with display 24 so that a visual record of the maintenance is preserved by controller 26 in the maintenance log of vehicle 10.

The present invention uses augmented reality (AR) with a tablet, smart phone, or set of computerized glasses, each being referred to as secondary display 24, communicating with a machine 10 over a wireless network to project a floating indicator 28, 30, 32 pointing out all inspection and service points (wear parts, lube points, etc.) on the machine (as seen on the screen of the tablet by use of the camera), combined with the engine hours of the machine 10 to indicate (for example, during a vehicle walk around) the number of hours left on the service point (service point arrow and indicator turns yellow if less than 20 hours and greater than 8 hours, red if less than 8 hours). When the user selects the service point on the machine 10, the display 24 will go to split screen mode (as shown in Fig. 3), and the service manual 34 and/or operator manual pages relevant to the selected service point will be displayed. After successful completion of the service, the counter is reset for that particular service item. Historical service records are saved in the system memory to create a report showing all completed services over the life of the vehicle, which serves to increase the value of the used vehicle.

The Augmented Reality App 18 receives information wirelessly from the machine 10 or mechanism 10 for superimposing information thereon. For example, you point your camera on your device directly at the machine 10. On your display you see a red flag that's pointing directly at the device that needs attention, in the body of the red flag, there is shown a data field that is populated by way of the wireless communication from the machine 10. For example, the data may be 3 hours left before the service interval is expired. After the service is completed, the user would touch the red flag on the screen, then a box would appear "service complete", then the device 24 communicates back to the machine 10 that the service is complete, and that interval would be reset for attention in 500 hours, for example.

As another example of the Augmented Reality App receiving information wirelessly from the machine, there could be an active fault on the machine 10, such as shown in designator 28, with an air filter being partially blocked. When the user points the camera of his device 24 at the machine 10 engine bay area, on the display 24 you would see a red flag that is pointing directly at the air filter. In the body of the red flag, it shows a data field that is populated via wireless communication from the machine 10, which could be, for example, "Filter Partially Plugged, Filter Service Required".

## Claims

1. A vehicle maintenance system for use with an agricultural vehicle (10), comprising:
a viewing system (16) configured to process an image of at least a portion of the vehicle (10); and
an augmentation system (18);
**characterized in that** the augmentation system (18) is configured to:
identify an element of the vehicle (10) in the image;
receive information from the vehicle (10) about a maintenance action relative to the element; and
place a designator (28, 30, 32) proximate to the element identified in the image, the designator (28, 30, 32) indicating the maintenance action that is to be undertaken involving the element.

2. The vehicle maintenance system of claim 1, wherein the designator (28, 30, 32) includes a message indicating an operational time interval from a scheduled maintenance of the element and the type of maintenance needed.

3. The vehicle maintenance system of claims 1 or 2, wherein the designator (28, 30, 32) image is scaled, oriented and overlain on the image of the vehicle (10) to approximate a location of the subassembly.

4. The vehicle maintenance system of claims 1-3, wherein the viewing system (16) also displays an additional image of details of the subassembly.

5. The vehicle maintenance system of claims 1-4, wherein the designator (28, 30, 32) includes a text message identifying a subassembly of the vehicle (10) for which the maintenance is to be undertaken.

6. The vehicle maintenance system of claim 53, wherein the text of the designator (28, 30, 32) is positioned in a box with an arrow extending therefrom pointing to an area of the image of the vehicle (10) to direct a user to that area for the performance of the maintenance.

7. The vehicle maintenance system of claims 1-6, wherein the augmentation system (18) is further configured to display an active fault of the vehicle (10) as part of the designator (28, 30, 32).

8. The vehicle maintenance system of claims 1-8, wherein information relative to the maintenance action is stored by the vehicle (10) and is wirelessly transmitted to the viewing system (16).

9. A vehicle maintenance method to be carried out by the vehicle maintenance system of any of the preceding claims, the method comprising the steps of:
viewing a portion of the vehicle (10) with a viewing system (16), the viewing system (16) displaying an image;
identifying an element of the vehicle (10) in the image;
receiving maintenance information about the element from the vehicle (10); and
augmenting the image by placing a designator (28, 30, 32) proximate to the element identified in the image, the designator (28, 30, 32) including information received in the receiving step.

10. The method of claim 9, wherein the designator (28, 30, 32) includes a message indicating an operational time interval from a scheduled maintenance of the element and the type of maintenance needed.

11. The method of claim 10, wherein the designator (28, 30, 32) image is scaled, oriented and overlain on the image of the vehicle (10) to approximate a location of the subassembly.

12. The method of claims 9-11, wherein the viewing system (16) also displays an additional image of details of the subassembly.
